# EUROPÄISCHE PATENTSCHRIFT

(11) **EP 0 884 511 B1**
(45) Veröffentlichungstag und Bekanntmachung des Hinweises auf die Patenterteilung: **03.09.2003**
(21) Anmeldenummer: 98110497.9
(22) Anmeldetag: 09.06.1998
(51) Int. Cl.: F16K 31/02

(54) **Miniaturisierte Ventileinrichtung**
Miniaturized valve device
Dispositif de soupape miniaturisé

(30) Priorität: 09.06.1997 DE 29710006 U
(43) Veröffentlichungstag der Anmeldung: 16.12.1998
(73) Patentinhaber: Bürkert Werke GmbH & Co., D-74653 Ingelfingen (DE)
(72) Erfinder: Hettinger, Christoph, 74653 Ingelfingen (DE)
(74) Vertreter: Degwert, Hartmut, Dipl.-Phys.

(56) Entgegenhaltungen:
- EP-A- 0 427 671
- DE-A- 2 402 085
- DE-A- 2 918 377
- DE-A- 3 233 161
- DE-A- 4 036 287
- DE-A- 4 425 540
- PATENT ABSTRACTS OF JAPAN vol. 013, no. 555 (M-904), 11. Dezember 1989 & JP 01 229178 A (TOTO LTD), 12. September 1989
- PATENT ABSTRACTS OF JAPAN vol. 013, no. 489 (M-888), 7. November 1989 & JP 01 193472 A (TOTO LTD), 3. August 1989

## Beschreibung

Die Erfindung betrifft eine miniaturisierte Ventileinrichtung mit einem Linearmotor in geringer Baugröße zur Betätigung des Ventils.

Die minimale Baugröße von Ventilen wird bei herkömmlichen Ventilanordnungen von der Größe der Steuerung begrenzt, wobei kleinere Baugrößen mit direktwirkenden Spulenantrieben realisiert werden.

Neue Technologien wie die Microsystemtechnik fordern immer kleinere und komplexere Geräte, Maschinen und Systeme. Einsatzgebiete für einzelne dieser Anwendungen sind heute schon in der Medizintechnik, der Meßtechnik, der Biotechnik, der Kommunikationstechnik, der Physik und in der Chemie zu finden.

In einigen dieser Bereiche ist es erforderlich, geringste Mengen von Fluiden zu dosieren, zu mischen usw. Zu diesem Zweck geht die Entwicklung hin zu kleinsten Ventilen und Anwendungen.

Bekannt ist ein Linearmotor in geringer Baugröße, dessen Wirkungsweise auf dem Piezoeffekt beruht. Dieser sehr kleine Linearmotor wird bereits für Meßaufgaben und für Positionierungen im Nanometerbereich angewandt. Ein Piezoröhrchen mit zwei Elektroden umschließt einen Läufer radial. Wird an die beiden Elektroden eine Spannung angelegt, dehnt sich das Piezoröhrchen aus. Diese Ausdehnung wird auf den Läufer übertragen, der aus dem Piezoröhrchen geschoben wird. Wird der Linearmotor mit Spannungsimpulsen angesteuert, können größere Hübe erreicht werden. Der Läufer folgt aufgrund seiner Massenträgheit der schnellen Bewegung des Piezos nicht und verschiebt sich bei jedem Spannungsimpuls ein kleines Stück relativ zum Piezo, bei Wiederholung der Impulse bis in den Millimeterbereich. Stromlos hält der miniaturisierte Linearmotor seinen Läufer in der gegebenen Position so fest, daß die Last, die er maximal heben kann, nicht ausreicht, den Läufer zu verschieben. Der Linearmotor ist im Nanometerbereich kalibrierbar.

In der DE-A-2 402 085 ist eine Vorrichtung zur Regelung von Mediumströmen gezeigt, die ein piezoelektrisches Antriebselement in Form eines stabförmigen Körpers aufweist. Der stabförmige Körper wirkt durch seine Längenänderung bei Anlegen einer Spannung auf ein entsprechendes Schließ- bzw. Regelelement. Im stromlosen Zustand wird das Schließ- bzw. Regelelement wieder in seinen Ausgangszustand bewegt.

In der DE-A-29 18 377 ist ein Ventil für strömende Medien gezeigt, das ein piezoelektrisches Element aufweist, das auf einen Schließkörper des Ventils wirkt.

Aufgabe der Erfindung ist es, eine Ventilanordnung zur Verfügung zu stellen, die angetrieben von einem Mikro-Linearmotor in kleinster Bauweise herzustellen ist. Durch die Erfindung geschaffene miniaturisierte Ventilanordnungen können in unterschiedlichen Ausführungsformen hergestellt sein.

Eine Ausführungsform einer Mikroventileinrichtung weist zwei plattenförmige Ventilelemente auf, von denen das eine, das eine Vielzahl von trapezförmigen Ventilsitzen enthält, fest mit dem Gehäuse verbunden ist Das zweite Element enthält ebenso viele Schließkörper, die zu den Ventilsitzen komplementär angeordnet sind. Erfindungsgemäß ist dieses Schließkörperelement fest mit einem beweglichen Teil verbunden, das wiederum am Läufer des Linearmotors bzw. einem den Läufer verlängernden Trägerrohr vorzugsweise durch Verschrauben befestigt ist. Durch diese Maßnahme kann der Piezoantrieb in einfacher Weise vom fluidischen Teil des Ventils getrennt werden, ohne in den Fluidkreislauf einzugreifen. Zu diesem Zweck ist das Fluidgehäuse gegen den miniaturisierten Linearmotor durch Dichtungen getrennt.

Erfindungsgemäß wird ein einfaches Auf/Zu-Ventil in 2- oder 3-Wege-Ausführung dadurch geschaffen, daß der Läufer des miniaturisierten Linearmotors auf zwei definierte Endlagen kalibriert wird. Ein oder mehrere Spannungsimpulse öffnen das Ventil bis zur definierten Endlage, entgegengesetzte Spannungsimpulse schließen das Ventil.

Aufgrund der vorgeschlagenen Anordnung wird darüber hinaus in einfacher Weise ein Proportionalventil hergestellt. Der Läufer des Linearmotors bewegt die Vorrichtung zum Öffnen und Schließen des Ventils proportional zu einer vorgegebenen Regelgröße.

Eine weitere erfindungsgemäße Ventileinrichtung erhält man durch die Verbindung des miniaturisierten Linearmotors mit einem Wippenventil. Diese Ventile sind aus der DE 44 25 540 A1 bekannt, sie zeichnen sich durch modularen Aufbau und geringen Raumbedarf aus. Der fluidische Teil mit mindestens einem Ein- und Auslaß enthält zum Öffnen und Schließen des Ventils eine Wippe aus magnetisierbarem Metall, die durch eine Feder in einer definierten Stellung gehalten wird. Vom Antrieb ist das Fluidgehäuse durch eine metallische Platte getrennt. Diese Platte ist unmagnetisch mit zwei magnetischen Einsätzen, die über der Wippe angeordnet sind.

Zum Öffnen und Schließen des Ventils verschiebt der Läufer des miniaturisierten Linearmotors auf dieser Platte zwischen seitlichen Führungen reibungsfrei ein magnetisches System.

Die erfindungsgemäße Ventilanordnung ist in der Ausgangsposition stromlos. Der Läufer des miniaturisierten Linearmotors hält das Permanentsystem auf dem unmagnetisierten Teil der Zwischenplatte. Die Wippe wird von einer Rückstellfeder in der Halteposition gehalten. Nun wird das Piezorohr mit so vielen Spannungsimpulsen angesteuert, bis der Läufer des Linearmotors das Magnetsystem über die magnetischen Teile der Zwischenplatte bewegt hat. Nun kann magnetische Energie durch die Platte fließen und will den magnetischen Kreis schließen. Die Wippe wird entgegen der Rückstellkraft der Feder angezogen, öffnet eine Ventilöffnung und schließt die zweite. Der Läufer des Linearmotors und damit das Magnetsystem bleibt solange in dieser Position, bis erneute entgegengesetzte Spannungsimpulse den Läufer mit dem Magnetsystem in die Ausgangslage zurückbringen. Die Magnetkraft wird geringer als die Rückstellkraft der Federn, somit wird die Wippe in ihre Ausgangsposition zurückgestellt.

Die beigefügten Zeichnungen zeigen zwei Ausführungsformen von Ventilanordnungen, die durch einen miniaturisierten Linearmotor betätigt werden. In der Zeichnung zeigen:
Figur 1 eine Teilschnittansicht eines Schieberventils gemäß einer Ausführungsform der Erfindung; und
Figur 2 eine Teilschnittansicht eines Sitzventils gemäß einer weiteren Ausführungsform der Erfindung.

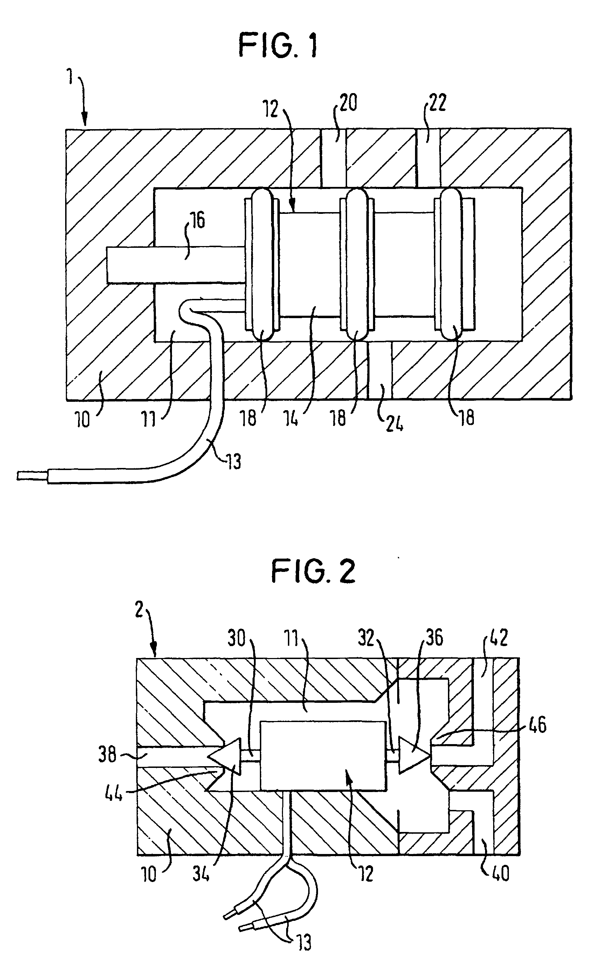

Die als Schieberventil 1 ausgebildete Ventileinrichtung der Figur 1 weist ein Gehäuse 10 mit einem Hohlraum 11 auf. In der Ventilkammer 11 des Gehäuses 10 ist ein miniaturisierter Linearmotor 12, der über eine elektrische Zuleitung 13 angesteuert wird, mit beweglichem Läufer 14 angeordnet. Der Läufer 14 ist beweglich auf einer am Gehäuse 10 festgelegten, feststehenden Achse 16 angeordnet. Der Läufer 14 trägt voneinander beabstandete Ringdichtungen 18, die zur Abdichtung vorgesehen sind. Das Gehäuse 10 weist einen Druckanschluß 20, einen Entlüftungsanschluß 22 und einen Arbeitsanschluß 24 auf, die jeweils durch eine Bohrung gebildet sind, die ausgehend von der Außenseite des Gehäuses 10 in den Hohlraum 11 mündet. Abhängig von der Stellung des Läufers 14 innerhalb des Hohlraums 11 geben die auf dem Läufer 14 angeordneten und diesen gegen den Hohlraum 11 abdichtenden Ringdichtungen 18 verschiedene Kanäle zwischen dem Druckanschluß 20, dem Entlüftungsanschluß 22 bzw. dem Arbeitsanschluß 24 frei oder verschließen diese. Die Ausführungsform nach Figur 1 läßt sich als 3-, 4- oder 5-Wege-Ventil auslegen.

Figur 2 zeigt eine als Sitzventil 2 ausgebildete Ventileinrichtung gemäß der Erfindung. Auch hier ist ein Gehäuse 10 vorgesehen, das einen Hohlraum 11 umgibt. In dem Hohlraum 11 ist wiederum ein miniaturisierter Linearmotor 12 befestigt, der über eine elektrische Zuleitung 13 angesteuert wird und der zwei bewegliche Achsen 30 und 32 aufweist. Jede der beweglichen Achsen 30 bzw. 32 trägt eine Sitzdichtung 34 bzw. 36. Das Gehäuse 10 ist mit einem Entlüftungsanschluß 38, einem Arbeitsanschluß 40 und einem Druckanschluß 42 versehen, die durch Bohrungen gebildet sind, die sich von der Außenseite des Gehäuses 10 in den Hohlraum 11 erstrecken. An der Mündung der zu dem Entlüftungsanschluß 38 gehörenden Bohrung in den Hohlraum 11 ist ein Ventilsitz 44 ausgebildet. In gleicher Weise ist die zu dem Druckanschluß 42 gehörende Bohrung mit einem Ventilsitz 46 versehen. Wird der Linearmotor 12 über die elektrische Zuleitung 13 angesteuert, werden die beweglichen Achsen 30, 32 vorgeschoben oder eingezogen, so daß die Sitzdichtungen 34 bzw. 36 auf den Ventilsitzen 44 bzw. 46 zu liegen kommen oder von diesen abheben. Auf diese Weise können Kanäle zwischen dem Entlüftungsanschluß 38, dem Arbeitsanschluß 40 bzw. dem Druckanschluß 42 nicht nur geöffnet und geschlossen werden, sondern es sind auch Zwischenstellungen möglich. Das in der Figur 2 gezeigte Sitzventil erfüllt damit die Funktionen Auf/Zu oder proportional.

## Patentansprüche

1. Miniaturisierte Ventileinrichtung mit einem Ventil, das einen Kanal (11) mit mindestens einem Einlaß (20) und einem Auslaß (24), einen piezoelektrischen Linearantrieb (12) und eine Vorrichtung (18, 34, 36) zum Öffnen und Schließen des Kanals (11) aufweist, wobei der piezoelektrische Linearantrieb (12) eine Bewegung der Vorrichtung (18, 34, 36) zum Öffnen und Schließen des Kanals (11) verursachen kann, **dadurch gekennzeichnet, daß** der piezoelekrische Linearantrieb ein Miniatur-Linearmotor (12) ist, der einen Läufer (14) und ein Piezorohr aufweist, und wobei durch Anlegen einer gepulsten Spannung an das Piezorohr der Läufer (14) in axialer Richtung inkremental bewegt und im stromlosen Zustand in seiner Position festgehalten wird.

2. Miniaturisierte Ventileinrichtung nach Anspruch 1, **dadurch gekennzeichnet, daß** der Läufer (14) des Linearmotors (12) einen Ventilsitz bewegt.

3. Miniaturisierte Ventileinrichtung nach Anspruch 2, **dadurch gekennzeichnet, daß** der Läufer (14) des Linearmotors (12) eine Anordnung mit mehreren Ventilsitzen bewegt.

4. Miniaturisierte Ventileinrichtung nach den Ansprüchen 2 und 3, **dadurch gekennzeichnet, daß** der Läufer (14) des Linearmotors (12) eine Membran bewegt.

5. Miniaturisierte Ventileinrichtung nach den Ansprüchen 2 bis 4, **dadurch gekennzeichnet, daß** der Läufer (14) des Linearmotors (12) ein Permanentmagnetsystem bewegt, das ein Ventil öffnet und schließt.

6. Miniaturisierte Ventileinrichtung nach den Ansprüchen 1 bis 5, **dadurch gekennzeichnet, daß** der Läufer (14) des Linearmotors (12) ein Zwei-Wege-Ventil öffnet und schließt.

7. Miniaturisierte Ventileinrichtung nach Anspruch 6, **dadurch gekennzeichnet, daß** der Läufer (14) des Linearmotors (12) ein Drei-Wege-Ventil (1) öffnet und schließt.

8. Miniaturisierte Ventileinrichtung nach den Ansprüchen 1 bis 7, **dadurch gekennzeichnet, daß** der Läufer (14) des Linearmotors (12) einen Schieber (18) in einem Mehrwegeventil (1) bewegt.

9. Miniaturisierte Ventileinrichtung nach den Ansprüchen 1 bis 8, **dadurch gekennzeichnet, daß** der Läufer (14) des Linearmotors (12) die Vorrichtung zum Öffnen und Schließen des Ventils (18, 34, 36) in zwei definierten Endlagenstellungen positioniert.

10. Miniaturisierte Ventileinrichtung nach Anspruch 9, **dadurch gekennzeichnet, daß** der Läufer (14) des Linearmotors (12) die Vorrichtung zum Öffnen und Schließen des Ventils (18, 34, 36) proportional zu einer vorgegebenen Regelgröße bewegt.

11. Miniaturisierte Ventileinrichtung nach den Ansprüchen 1 bis 10, **dadurch gekennzeichnet, daß** der Läufer (14) des Linearmotors (12) die Vorrichtung zum Absperren des Ventils gegen die Kraft einer Feder öffnet.

12. Miniaturisierte Ventileinrichtung nach Anspruch 11, **dadurch gekennzeichnet, daß** der Läufer (14) des Linearmotors (12) die Vorrichtung zum Absperren des Ventils gegen die Kraft einer Feder schließt.

13. Miniaturisierte Ventileinrichtung nach den Ansprüchen 11 und 12, **dadurch gekennzeichnet, daß** der Läufer (14) des Linearmotors (12) in spannungslosem Zustand die Vorrichtung zum Öffnen und Schließen des Ventils (18, 34, 36) in der vorgegebenen Position hält.

14. Miniaturisierte Ventileinrichtung nach den Ansprüchen 1 bis 13, **dadurch gekennzeichnet, daß** mehrere Ventileinheiten zu einem Ventilblock kombiniert werden.

15. Miniaturisierte Ventileinrichtung nach den Ansprüchen 1 bis 14, **dadurch gekennzeichnet, daß** durch einen Kanal im Inneren des Läufers ein elektrischer Anschluß zu einem Sensor führt, der an der Vorrichtung zum Öffnen und Schließen des Ventils angebracht ist.

16. Miniaturisierte Ventileinrichtung nach den Ansprüchen 1 bis 15, **dadurch gekennzeichnet, daß** der Läufer (14) des Linearmotors (12) über ein Trägerrohr (30, 32) mit der Vorrichtung (34, 36) zum Öffnen und Schließen des Ventils durch Verschrauben verbunden ist.

## Claims

1. A miniaturized valve mechanism comprising a valve including a channel (11) having at least one inlet (20) and one outlet (24), a piezoelectric linear drive (12) and a device (18, 34, 36) for opening and closing the channel (11), the piezoelectric linear drive (12) being adapted to cause a movement of the device (18, 34, 36) for opening and closing the channel (11), **characterized in that** the piezoelectric linear drive is a miniature linear motor (12) including a driver (14) and a piezoelectric tube and, by applying a pulsed voltage to the piezoelectric tube, the driver (14) being moved incrementally in the axial direction, and being firmly held in its position under no-voltage conditions.

2. The miniaturized valve mechanism according to Claim 1, **characterized in that** the driver (14) of the linear motor (12) moves a valve seat.

3. The miniaturized valve mechanism according to Claim 2, **characterized in that** the driver (14) of the linear motor (12) moves an arrangement with a plurality of valve seats.

4. The miniaturized valve mechanism according to Claims 2 and 3, **characterized in that** the driver (14) of the linear motor (12) moves a diaphragm.

5. The miniaturized valve mechanism according to Claims 2 to 4, **characterized in that** the driver (14) of the linear motor (12) moves a permanent-magnetic system to open or close a valve.

6. The miniaturized valve mechanism according to Claims 1 to 5, **characterized in that** the driver (14) of the linear motor (12) opens and closes a two-way valve.

7. The miniaturized valve mechanism according to Claim 6, **characterized in that** the driver (14) of the linear motor (12) opens and closes a three-way valve (1).

8. The miniaturized valve mechanism according to Claims 1 to 7, **characterized in that** the driver (14) of the linear motor (12) moves a slider (18) in a multiple-way valve (1).

9. The miniaturized valve mechanism according to Claims 1 to 8, **characterized in that** the driver (14) of the linear motor (12) positions the device for opening and closing of the valve (18, 34, 36) in two pre-defined end-of-travel positions.

10. The miniaturized valve mechanism according to Claim 9, **characterized in that** the driver (14) of the linear motor (12) moves the device for opening and closing of the valve (18, 34, 36) proportionally to a pre-determined controlled variable.

11. The miniaturized valve mechanism according to Claims 1 to 10, **characterized in that** the driver (14) of the linear motor (12) opens the device for closing of the valve against the force of a spring.

12. The miniaturized valve mechanism according to Claim 11, **characterized in that** the driver (14) of the linear motor (12) closes the device for closing of the valve against the force of a spring.

13. The miniaturized valve mechanism according to Claims 11 and 12, **characterized in that** the driver (14) of the linear motor (12) retains the device for opening and closing of the valve (18, 34, 36) in the pre-determined position in the condition with no voltage applied.

14. The miniaturized valve mechanism according to Claims 1 to 13, **characterized in that** a plurality of valve units are combined to form a valve block.

15. The miniaturized valve mechanism according to Claims 1 to 14, **characterized in that** an electrical connection leads through a channel inside the driver to a sensor which is fitted to the device for opening and closing of the valve.

16. The miniaturized valve mechanism according to Claims 1 to 15, **characterized in that** the driver (14) of the linear motor (12) is connected to the device (34, 36) for opening and closing of the valve via a carrier tube (30, 32) by means of a screwed joint.

## Revendications

1. Mécanisme de valve miniaturisé comportant une valve qui présente un canal (11) avec au moins une entrée (20) et une sortie (24), un entraînement linéaire (12) piézoélectrique et un dispositif (18, 34, 36) pour ouvrir et fermer le canal (11), l'entraînement linéaire (12) piézoélectrique pouvant provoquer un mouvement du dispositif (18, 34, 36) pour ouvrir et fermer le canal (11), **caractérisé en ce que** l'entraînement linéaire est un moteur linéaire miniature (12) qui comprend un curseur (14) et un tube piézoélectrique et, en appliquant une tension pulsée au tube piézoélectrique, le curseur (11) est mis en mouvement de manière incrémentielle en direction axiale et maintenu dans sa position à l'état sans courant.

2. Mécanisme de valve miniaturisé selon la revendication 1, **caractérisé en ce que** le curseur (14) du moteur linéaire (12) met en mouvement un siège de soupape.

3. Mécanisme de valve miniaturisé selon la revendication 2, **caractérisé en ce que** le curseur (14) du moteur linéaire (12) met en mouvement un agencement à plusieurs sièges de soupape.

4. Mécanisme de valve miniaturisé selon les revendications 2 et 3, **caractérisé en ce que** le curseur (14) du moteur linéaire (12) met en mouvement une membrane.

5. Mécanisme de valve miniaturisé selon les revendications 2 à 4, **caractérisé en ce que** le curseur (14) du moteur linéaire (12) met en mouvement un système d'aimant permanent qui ouvre et ferme une valve.

6. Mécanisme de valve miniaturisé selon les revendications 1 à 5, **caractérisé en ce que** le curseur (14) du moteur linéaire (12) ouvre et ferme une valve à deux voies.

7. Mécanisme de valve miniaturisé selon la revendication 6, **caractérisé en ce que** le curseur (14) du moteur linéaire (12) ouvre et ferme une valve à trois voies (1).

8. Mécanisme de valve miniaturisé selon les revendications 1 à 7, **caractérisé en ce que** le curseur (14) du moteur linéaire (12) met en mouvement un tiroir (18) dans une valve à plusieurs voies (1).

9. Mécanisme de valve miniaturisé selon l'une des revendications 1 à 8, **caractérisé en ce que** le curseur (14) du moteur linéaire (12) positionne le dispositif pour ouvrir et fermer la valve (18, 34, 36) dans deux positions de fin de course.

10. Mécanisme de valve miniaturisé selon la revendication 9, **caractérisé en ce que** le curseur (14) du moteur linéaire (12) met en mouvement le dispositif pour ouvrir et fermer la valve (18, 34, 36) proportionnellement à une grandeur réglée.

11. Mécanisme de valve miniaturisé selon les revendications 1 à 10, **caractérisé en ce que** le curseur (14) du moteur linéaire (12) ouvre le dispositif pour obturer la valve à l'encontre de la force d'un ressort.

12. Mécanisme de valve miniaturisé selon la revendication 11, **caractérisé en ce que** le curseur (14) du moteur linéaire (12) ferme le dispositif pour obturer la valve à l'encontre de la force d'un ressort.

13. Mécanisme de valve miniaturisé selon les revendications 11 et 12 **caractérisé en ce qu'**à l'état sans courant, le curseur (14) du moteur linéaire (12) maintient le dispositif pour ouvrir et fermer la valve (18, 34, 36) dans la position prédéterminée.

14. Mécanisme de valve miniaturisé selon les revendications 1 à 13, **caractérisé en ce que** plusieurs unités de valves sont combinées pour former un bloc de valves.

15. Mécanisme de valve miniaturisé selon les revendications 1 à 14, **caractérisé en ce qu'**un raccord électrique mène à travers un canal à l'intérieur du curseur jusqu'à un capteur qui est monté sur le dispositif pour ouvrir et fermer la valve.

16. Mécanisme de valve miniaturisé selon les revendications 1 à 15, **caractérisé en ce que** le curseur (14) du moteur linéaire (12) est relié par vissage via un tube support (30, 32), au dispositif (34, 36) pour ouvrir et fermer la valve.
